**Europäisches Patentamt**

**European Patent Office**

**Office européen des brevets**

(11) Veröffentlichungsnummer: **0 185 159**
**A1**

## (12) EUROPÄISCHE PATENTANMELDUNG

(21) Anmeldenummer: **85112881.9**

(22) Anmeldetag: **11.10.85**

(51) Int. Cl.⁴: **B 23 B 31/12**

(30) Priorität: **15.12.84 DE 3445804**

(43) Veröffentlichungstag der Anmeldung:
**25.06.86 Patentblatt 86/26**

(84) Benannte Vertragsstaaten:
**CH FR GB IT LI**

(71) Anmelder: **Röhm, Günter Horst**
**Heinrich-Röhm-Strasse 50**
**D-7927 Sontheim(DE)**

(72) Erfinder: **Röhm, Günter Horst**
**Heinrich-Röhm-Strasse 50**
**D-7927 Sontheim(DE)**

(74) Vertreter: **Fay, Hermann, Dipl.-Phys. Dr.**
**Ensingerstrasse 21 Postfach 1767**
**D-7900 Ulm (Donau)(DE)**

(54) **Bohrfutter.**

(57) Der Futterkörper (4) des Bohrfutters besitzt eine Werkzeugaufnahme (5) und einen darin mündenden axialen Durchgang (60), durch den hindurch die Schlagbewegung von der Bohrspindel (1) auf das Ende des Bohrers übertragbar ist, der zwischen Spannbackenbolzen (6) gehalten ist, die im Futterkörper (4) in Führungsbohrungen (9) laufen und mittels eines Stellrings (10) verstellbar sind, der in einer nach außen offenen und die Führungsbohrungen (9) anschneidenden Ringnut (11) des Futterkörpers (4) drehbar angeordnet ist. Am rückwärtigen Rand der Ringnut (11) ist im Futterkörper (4) ein Ringfalz (20) ausgebildet, in den eine am Stellring (10) vorgesehene Ringschulter (21) greift. Der Stellring (10) ist in radialer Richtung nur über die einander zugekehrten Umfangsflächen der Ringschulter (21) und des Ringfalzes (20) am Futterkörper (4) geführt.

Fig.1

0185159

Günter Horst Röhm
Heinrich-Röhm-Straße 50
7927 Sontheim

7900 Ulm, 08.10.85
Akte  E/6704 f/th

B o h r f u t t e r

Die Erfindung betrifft ein Bohrfutter zum Schlagbohren
mit einem an eine Bohrspindel anschließbaren Futterkörper, der eine Werkzeugaufnahme für den Bohrer und
einen darin mündenden axialen Durchgang aufweist,
durch den hindurch die Schlagbewegung von der Bohrspindel auf das Ende des Bohrers übertragbar ist, der
in der Werkzeugaufnahme zwischen Spannbackenbolzen gehalten ist, die im Futterkörper in zur Futterachse geneigten Führungsbohrungen laufen und mittels eines mit
den Spannbackenbolzen im Gewindeeingriff stehenden
Stellrings verstellbar sind, der in einer nach außen
offenen und die Führungsbohrungen anschneidenden Ringnut des Futterkörpers drehbar angeordnet ist.

Bei derartigen Bohrfuttern ist der Stellring aus Montagegründen zweiteilig ausgebildet, um die beiden
Stellringhälften jeweils von der Seite her in die Ringnut des Futterkörpers einlegen zu können. Die beiden
Stellringhälften sind durch eine Stellhülse zusammen
gehalten, die auf die beiden Stellringhälften aufgepreßt oder in anderer geeigneter Weise an ihnen befestigt ist. In axialer Richtung ist der Stellring
zwischen den beiden Seitenwänden der Ringnut geführt.
Auf der Vorderseite, d. h. der dem Bohrer zugekehrten
Seite besitzt der Stellring einen den Futterkörper

Adresse: Postfach 1767, 7900 Ulm-Donau    Telefon        Telegramme        Postscheckkonto    Bankkonto
Ensingerstraße 21                         (0731) 64946   Prospat Ulmdonau  Stuttgart 73231    Deutsche Bank AG Ulm 18467l

außen und nach vorn übergreifenden Kragen, an dem ein Zahnkranz ausgebildet ist, in den das Zahnritzel eines Spannschlüssels greift, der zum Spannen und Lösen des Bohrfutters mit einem Führungszapfen in einer Führungsbohrung des Futterkörpers ansetzbar ist. Die Führung des Stellrings am Futterkörper in radialer Richtung erfolgt über die innere Umfangsfläche dieses den Zahnkranz bildenden Kragens und die ihm zugekehrte Umfangsfläche des Futterkörpers. In der Höhe der Ringnut ist der Futterkörper mit einer konstruktiv bedingten Schwachstelle behaftet, weil dort der Futterkörperquerschnitt außer durch die Ringnut auch durch die Führungsbohrungen für die Spannbackenbolzen und durch die Werkzeugaufnahme bzw. den in ihr mündenden axialen Durchgang besonders geschwächt ist. Diese Schwächung ausgleichende Querschnittsvergrößerungen des Futterkörpers sind nicht möglich, da der Außendurchmesser des Spannfutters vorgegeben ist und nicht überschritten werden darf. Die nachteilige Folge ist, daß unter den starken Beanspruchungen des Schlagbohrbetriebs Beschädigungen des Futterkörpers im Bereich dieser Schwachstelle auftreten können. - Der Erfindung liegt die Aufgabe zugrunde, ein Bohrfutter der eingangs genannten Art so auszubilden, daß diese Beschädigungen vermieden werden.

Diese Aufgabe wird nach der Erfindung dadurch gelöst, daß am rückwärtigen, d. h. der Bohrspindel zugewandten Rand der Ringnut im Futterkörper ein Ringfalz ausgebildet ist, in den eine am Stellring vorgesehene Ringschulter greift, und daß der Stellring in radialer Richtung nur über die einander zugekehrten Umfangsflächen der Ringschulter und des Ringfalzes am Futterkörper geführt ist. Im übrigen kann der Stellring in axialer Richtung an der vorderen Axialfläche der Ringnut und auf der rückwärtigen Seite nur an der Axialfläche des Ringfalzes geführt sein, welcher der Stellring mit der Axialfläche seiner Ringschulter anliegt.

Der durch die Erfindung erreichte Erfolg, nämlich den Futterkörper im Bereich der Ringnut an seiner schwächsten Stelle soweit zu entlasten, daß dort keine Beschädigungen mehr auftreten, ist vermutlich darauf zurückzuführen, daß die am Stellring wirksam werdenden Querkräfte, wie die gerade im Schlagbohrbetrieb besonders großen, aus den Massen des Stellrings und der Stellhülse herrührenden dynamischen Kräfte und die von den Spannbackenbolzen stammenden statischen Kräfte, die aus der in der Regel nie vollständigen Kreissymmetrie der Spannbackenanordnung im Futterkörper entstehen, auf der Rückseite der Ringnut, d. h. auf deren der Bohrspindel zugekehrten Seite in den Futterkörper eingeleitet werden und daher dessen im Querschnitt geschwächten Bereich nicht mehr belasten können, wie es bei einem Bohrfutter mit auf der Vorderseite der Ringnut am Futterkörper geführten Stellring der Fall ist.

Im folgenden wird die Erfindung an einem in der Zeichnung dargestellten Ausführungsbeispiel näher erläutert; es zeigen:

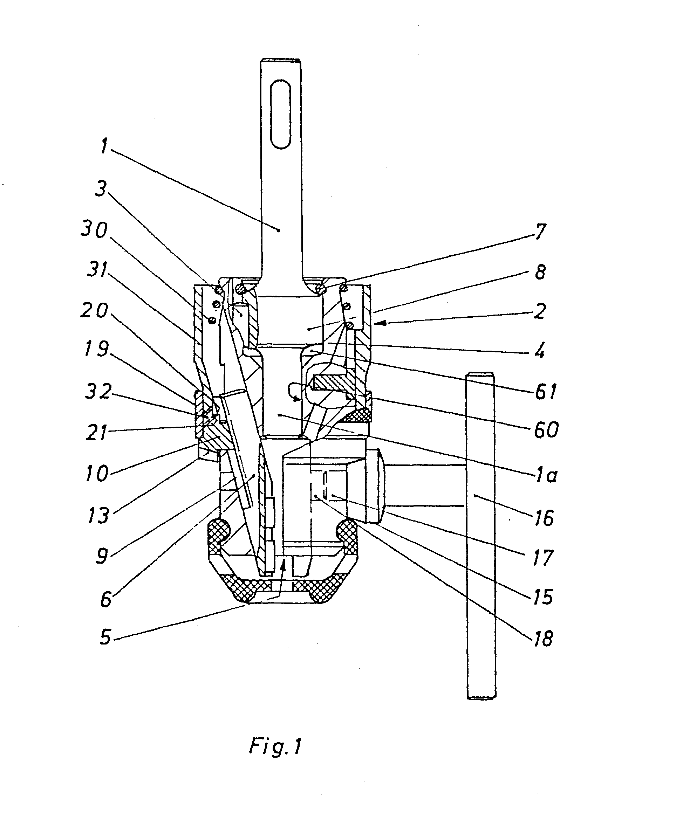

Fig. 1 ein Bohrfutter nach der Erfindung im Axialschnitt, teils in Seitenansicht,

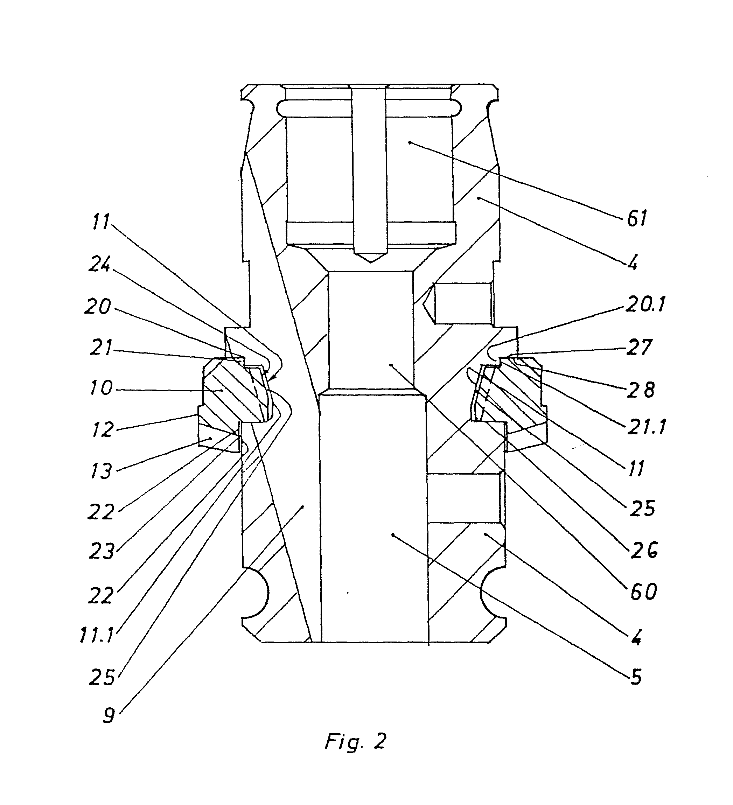

Fig. 2 den Futterkörper und den Stellring des Bohrfutters nach Fig. 1 in vergrößerter Darstellung.

In der Zeichnung ist die Bohrspindel mit 1, das von
der Bohrspindel angetriebene Bohrfutter mit 2 bezeichnet. Das Bohrfutter 2 ist mit einer Aufnahme 61 drehschlüssig auf der Bohrspindel 1 angeordnet, wozu ein
Zapfen 3 dient, der eine begrenzte axiale Verschiebbarkeit des Bohrfutters 2 auf der Bohrspindel 1 ermöglicht. Im Futterkörper 4 des Bohrfutters befindet
sich eine Werkzeugaufnahme 5 für den nicht dargestellten Bohrer und ein in der Werkzeugaufnahme 5 mündender
axialer Durchgang 60, durch den hindurch die Schlagbewegung von der Bohrspindel 1 über deren als Döpper
arbeitendes Ende 1a auf den in der Werkzeugaufnahme
5 zwischen Spannbackenbolzen 6 gehaltenen Bohrerschaft
übertragen wird. Der Futterkörper 4 ist über einen
elastischen Ring 7 gegen einen Bund 8 der Bohrspindel
1 abgestützt, so daß das Bohrfutter 2 von der Schlagbewegung der Bohrspindel 1 praktisch entkoppelt ist.
Die Spannbackenbolzen 6 laufen in gegen die Futterachse geneigten Führungsbohrungen 9 des Futterkörpers
4 und sind mittels eines mit den Spannbackenbolzen 6
im Gewindeeingriff stehenden Stellrings 10 verstellbar,
der in einer nach außen offenen und die Führungsbohrungen 9 anschneidenden Ringnut 11 des Futterkörpers
4 drehbar angeordnet ist. Der Stellring 10 bildet auf
seiner vorderen, d. h. dem nicht dargestellten Bohrer
zugewandten Seite einen den Futterkörper 4 außen nach
vorn übergreifenden Kragen 12, der mit einem Zahnkranz 13 versehen ist, in den das Zahnritzel 15 eines Spannschlüssels 16 greift, der zum Spannen und Lösen des Bohrfutters mit einem Führungszapfen 17 in einer Führungsbohrung 18 des Futterkörpers 4 ansetzbar ist. Der Stellring 10 besteht aus zwei Hälften, die durch eine Stellhülse 19 zusammen gehalten sind. Am rückwärtigen, d. h. der Bohrspindel 1 zugewandten Rand der Ringnut 11 ist im Futterkörper 4 ein Ringfalz 20 ausgebildet. In diesen Ringfalz 20 greift eine am Stellring 10 vorgesehene Ringschulter 21. Der Stellring 10 ist in radialer Richtung nur über die einander zugekehrten Umfangsflächen 20.1, 21.1 dieses Ringfalzes 20 und dieser Ringschulter 21 am Futterkörper 4 geführt. Zwischen den entsprechenden Umfangsflächen 22 des den Zahnkranz 13 tragenden Kragens 12 und des Futterkörpers 4 befindet sich ein Ringspalt 23. Auch zwischen dem Boden 11.1 der Ringnut 11 und dem Rücken der Gewindegänge 24 auf der inneren Umfangsfläche des Stellrings 10 ist ein freies Spiel 25 vorgesehen, so daß alle auf den Stellring 10 ausgeübten Querkräfte nur über die schon erwähnten Umfangsflächen 20.1, 21.1 der Ringschulter 21 und des Ringfalzes 20 auf den Futterkörper 4 übertragen werden. Diese Querkräfte werden daher in den Futterkörper 4 in dessen auf der Seite der Bohrspindel 1 liegenden hinteren Teil eingeleitet, beanspruchen also nicht den von der Ringnut 11 umschlossenen Bereich des Futterkörpers 4, der durch die Ringnut 11, die Führungsbohrungen 9 und die Werkzeugaufnahme 9 bzw. den in ihr mündenden Durchgang 60 besonders geschwächt ist. In axialer Richtung kann der Stellring 10 einerseits an der vorderen Axialfläche 26 der Ringnut 11 und auf der rückwärtigen Seite wiederum nur an der Axialfläche 27 des Ringfalzes 20 geführt sein, der der Stellring 10 mit der Axialfläche 28 seiner Ringschulter 21 anliegt.

Im übrigen ist zwischen dem Futterkörper 4 und dem
Stellring 10 eine Feststelleinrichtung vorgesehen,
die ein selbsttätiges Lösen des Bohrfutters verhindert. Sie besteht im Ausführungsbeispiel aus einer
verschiebbar unter der Kraft einer Feder 30 am Futterkörper 4 undrehbar geführten Sperrhülse 31, die
über eine Verzahnung 32 den Stellring 10 verriegelt.
Um die Verriegelung aufzuheben, ist die Sperrhülse
31 gegen die Kraft der Feder 30 axial zurückzuschieben,
so daß die Verzahnungen 32 außer Eingriff gelangen. Jedoch ist die Feststellvorrichtung nicht Gegenstand der
Erfindung und bedarf daher hier keiner weiteren Beschreibung.

Günter Horst Röhm
Heinrich-Röhm-Straße 50
7927 Sontheim

7900 Ulm, 08.10.85
Akte E/6704 f/th

Ansprüche:

1. Bohrfutter zum Schlagbohren mit einem an eine Bohrspindel anschließbaren Futterkörper (4), der eine Werkzeugaufnahme (5) für den Bohrer und einen darin mündenden axialen Durchgang (60) aufweist, durch den hindurch die Schlagbewegung von der Bohrspindel (1) auf das Ende des Bohrers übertragbar ist, der in der Werkzeugaufnahme (60) zwischen Spannbackenbolzen (6) gehalten ist, die im Futterkörper (4) in zur Futterachse geneigten Führungsbohrungen (9) laufen und mittels eines mit den Spannbackenbolzen (6) im Gewindeeingriff stehenden Stellrings (10) verstellbar sind, der in einer nach außen offenen und die Führungsbohrungen (9) anschneidenden Ringnut (11) des Futterkörpers (4) drehbar angeordnet ist,
dadurch gekennzeichnet, daß am rückwärtigen, d. h. der Bohrspindel (1) zugewandten Rand der Ringnut (11) im Futterkörper (4) ein Ringfalz (20) ausgebildet ist, in den eine am Stellring (10) vorgesehene Ringschulter (21) greift, und daß der Stellring (10) in radialer Richtung nur über die einander zugekehrten Umfangsflächen (20.1, 21.1) der Ringschulter (21) und des Ringfalzes (20) am Futterkörper (4) geführt ist.

Adresse: Postfach 1767, 7900 Ulm-Donau
Ensingerstraße 21

Telefon
(0731) 64946

Telegramme
Prospat Ulmdonau

Postscheckkonto
Stuttgart 73231

Bankkonto
Deutsche Bank AG Ulm 184671

2. Bohrfutter nach Anspruch 1, dadurch gekennzeichnet, daß der Stellring (10) in axialer Richtung an der vorderen Axialfläche (26) der Ringnut (11) und auf der rückwärtigen Seite nur an der Axialfläche (27) des Ringfalzes (20) geführt ist, welcher der Stellring (10) mit der Axialfläche (28) seiner Ringschulter (21) anliegt.

Fig.1

Günter Horst Röhm

Fig. 2

Günter Horst Röhm

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-C- 806 752 (RÖHM)<br>* Insgesamt * | 1,2 | B 23 B  31/12 |
| | --- | | |
| A | FR-A-2 418 053 (ROBERT BOSCH) | | |
| | ----- | | |

RECHERCHIERTE
SACHGEBIETE (Int Cl 4)

B 23 B

Der vorliegende Recherchenbericht wurde für alle Patentansprüche erstellt

| Recherchenort<br>DEN HAAG | Abschlußdatum der Recherche<br>05-02-1986 | Prüfer<br>BENZE W.E. |
|---|---|---|